(19) Europäisches Patentamt
European Patent Office
Office européen des brevets

(11) **EP 3 083 516 B1**

(12) **FASCICULE DE BREVET EUROPEEN**

(45) Date de publication et mention
de la délivrance du brevet:
**17.02.2021  Bulletin 2021/07**

(21) Numéro de dépôt: **14827840.1**

(22) Date de dépôt: **15.12.2014**

(51) Int Cl.:
*C03C 3/083* *(2006.01)*      *C03C 3/085* *(2006.01)*
*C03C 3/087* *(2006.01)*      *C03C 3/091* *(2006.01)*
*C03C 3/093* *(2006.01)*      *C03C 3/097* *(2006.01)*
*C03C 21/00* *(2006.01)*

(86) Numéro de dépôt international:
**PCT/FR2014/053337**

(87) Numéro de publication internationale:
**WO 2015/092245 (25.06.2015 Gazette 2015/25)**

(54) **PLAQUE DE CUISSON PAR INDUCTION ET PROCÉDÉ D'OBTENTION**

INDUKTIONSKOCHPLATTE UND HERSTELLUNGSVERFAHREN

INDUCTION COOKING PLATE AND PRODUCTION METHOD

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité:  **20.12.2013  FR 1363157**

(43) Date de publication de la demande:
**26.10.2016  Bulletin 2016/43**

(73) Titulaire: **Eurokera S.N.C.
02400 Château-Thierry (FR)**

(72) Inventeurs:
  • **LESTRINGANT, Claire
    F-75019 Paris (FR)**
  • **GY, René
    F-93140 Bondy (FR)**
  • **FERRIZ, Gaëlle
    F-51100 Reims (FR)**
  • **VILATO, Pablo
    F-75014 Paris (FR)**

(74) Mandataire: **Saint-Gobain Recherche
Département Propriété Industrielle
39 Quai Lucien Lefranc
93300 Aubervilliers (FR)**

(56) Documents cités:
WO-A2-2013/136013     FR-A1- 2 861 720
GB-A- 2 079 119       US-A1- 2005 250 639
US-A1- 2012 085 336   US-A1- 2013 256 301

EP 3 083 516 B1

**Description**

L'invention concerne une plaque de cuisson par induction (destinée en particulier à couvrir ou recevoir des éléments de chauffage par induction), et concerne également un dispositif de cuisson par induction incorporant ladite plaque ainsi que son procédé d'obtention.

De façon traditionnelle, les dispositifs de cuisson par induction comprennent au moins un inducteur disposé sous une plaque en vitrocéramique. Ces dispositifs sont encastrés dans un plan de travail ou dans le bâti d'une cuisinière. La plaque sert de support aux ustensiles de cuisson (casseroles, poêles...), lesquels sont chauffés grâce au courant électrique induit en leur sein par le champ magnétique généré par les inducteurs. Les vitrocéramiques d'aluminosilicate de lithium sont employées à cet effet grâce à leur résistance au choc thermique, conséquence de leur coefficient de dilatation thermique nul ou quasi-nul. Les vitrocéramiques sont produites en soumettant à un traitement thermique à haute température des plaques de verre d'aluminosilicate de lithium, traitement qui génère au sein de la plaque des cristaux de structure beta-quartz ou beta-spodumène dont le coefficient de dilatation thermique est négatif.

Il a été proposé en 1980, par la demande de brevet GB 2 079 119, d'utiliser en lieu et place de la vitrocéramique des plaques de verre épaisses (de 5 ou 6 mm d'épaisseur) éventuellement trempées. Les compositions envisagées sont diverses: sodo-calciques, borosilicates, aluminosilicates... Ces plaques n'ont toutefois jamais été commercialisées, car leur résistance thermomécanique s'est révélée insuffisante pour une utilisation pratique et quotidienne, si bien que les dispositifs de cuisson par induction sont, plus de 30 ans après, toujours à base de vitrocéramique. Les documents WO 2013/136013 et US 2005/0250639 décrivent des verres d'aluminosilicate de lithium trempes, mais n'envisagent pas d'applications dans le domaine des dispositifs de cuisson par induction.

Deux types de renforcements ont été envisagés afin d'améliorer les propriétés mécaniques des plaques de verre destinées à servir de plaques de cuisson et exposées de ce fait à des températures élevées lors de leur utilisation : le renforcement thermique et le renforcement chimique.

Le renforcement thermique est aussi appelé trempe ou durcissement. Il consiste à réchauffer le verre au-delà de sa température de transition vitreuse, puis à le refroidir brutalement, généralement au moyen de buses envoyant de l'air sur la surface du verre. Comme la surface se refroidit plus vite que le cœur du verre, des contraintes en compression se forment à la surface de la plaque de verre, équilibrées par des contraintes en tension au cœur de la plaque. Cette méthode de trempe est particulièrement rapide (quelques minutes) et économique mais peut dans certains cas dégrader la qualité optique des verres, la contrainte de surface obtenue (permettant d'évaluer le renforcement obtenu) n'excédant pas généralement 200 MPa.

Le renforcement chimique, parfois appelé trempe chimique, est un traitement mettant en œuvre un échange ionique. La substitution superficielle d'un ion de la plaque de verre (généralement un ion alcalin) par un ion de rayon ionique supérieur (usuellement l'ion de rayon ionique supérieur le plus proche, le sodium étant ainsi traditionnellement remplacé par le potassium et le lithium par le sodium) permet de créer en surface de la plaque de verre des contraintes résiduelles de compression, jusqu'à une certaine profondeur. Cette méthode confère une résistance supérieure à celle conférée par le renforcement thermique mais est plus longue (quelques heures à semaines) et plus coûteuse. En outre, le verre renforcé par échange ionique a tendance à perdre son renforcement mécanique lorsqu'il est exposé à des températures élevées sur une longue durée ou lorsqu'il est exposé à de très hautes températures, ce qui pose des problèmes dans le domaine des plaques de cuisson où les plaques sont exposées constamment à des températures élevées voire ponctuellement à des températures très élevées (casserole vide oubliée sur la plaque en état de chauffe). De plus, la trempe chimique étant un traitement en surface, toute rayure de la surface du verre peut affecter sa résistance mécanique.

Le but de la présente invention a donc été de mettre au point de nouvelles plaques en verre élargissant la gamme des produits existants, lesdites plaques servent à une utilisation dans laquelle elles sont soumises à des chauffages quotidiens à des températures élevées (en particulier pouvant aller régulièrement jusqu'à 350°C en usage normal, voire ponctuellement jusqu'à 450°C environ en situation extrême avant activation des systèmes de sécurité interrompant le chauffage), convenant à l'utilisation comme plaque à induction (destinée à être combinée à au moins un inducteur notamment dans un dispositif de cuisson par induction), ces nouvelles plaques présentant une bonne résistance mécanique convenant à leur utilisation, et conservant une résistance mécanique suffisante en situation de chauffage régulier ou dans des situations d'usage où leur surface peut subir des frottements et rayures, lesdites plaques conservant en outre de bonnes qualités optiques et pouvant être obtenues aisément.

La présente invention concerne ainsi une nouvelle plaque destinée à couvrir ou recevoir des éléments de chauffage par induction, une plaque de cuisson par induction, ladite plaque étant une plaque (ou feuille) en verre dont la composition est de type aluminosilicate de lithium, ladite plaque présentant une zone superficielle d'au moins 5 $\mu$m d'épaisseur comprenant des ions potassium en remplacement des ions lithium du verre (l'épaisseur de cette zone étant en particulier déterminée par une méthode de mesure par prise de poids telle que décrite ultérieurement). Cette zone est avantageusement obtenue par échange ionique (des ions lithium du verre) à l'aide d'ions potassium (depuis la surface du verre et sur la profondeur de la zone d'échange), le verre en surface se trouvant en compression à l'intérieur de ladite zone superficielle, la plaque comprenant également une zone centrale (dans l'épaisseur restante de la plaque de verre) en tension, la plaque selon l'invention étant ainsi renforcée par échange ionique au potassium.

La présente invention concerne également un dispositif de cuisson par induction comprenant au moins un inducteur disposé sous la plaque ci-avant définie.

La présente invention concerne également un procédé de fabrication d'une plaque à induction en verre, en particulier d'une plaque selon l'invention, dans lequel la plaque en verre d'aluminosilicate de lithium est mise en contact avec au moins un sel de potassium (et ainsi renforcée par échange ionique au potassium), en particulier pendant au moins 8h à au moins 360°C (et de préférence à au moins 400°C, en particulier à au moins 450°C).

Les plaques selon l'invention présentent les propriétés requises pour leur utilisation comme plaques de cuisson par induction, en particulier présentent une résistance thermique et mécanique satisfaisantes telles que recherchées dans leurs conditions d'utilisation, ces résistances persistant en situation de chauffage régulier, ces plaques résistant en outre aux rayures et présentant de bonnes qualités optiques, leur méthode d'obtention restant de surcroît relativement simple.

En outre, le renforcement mécanique particulièrement satisfaisant et pérenne obtenu permet de réduire l'épaisseur de la plaque tout en conservant une bonne résistance mécanique, ceci présentant plusieurs avantages en termes notamment d'économie de matériaux et d'énergie, de poids et facilité d'installation, et de visibilité de l'affichage combiné à la plaque. L'épaisseur de la plaque de verre selon l'invention peut ainsi avantageusement être inférieure ou égale à 4 mm, en particulier inférieure ou égale à 3.5 mm, notamment inférieure ou égale à 3 mm.

Le verre de type aluminosilicate de lithium est un verre comprenant au moins de la silice $SiO_2$, de l'alumine $Al_2O_3$ et de l'oxyde de lithium $Li_2O$. La composition chimique du verre d'aluminosilicate de lithium formant la plaque selon l'invention (initialement avant échange des ions lithium de la zone superficielle, cette composition restant également celle de la plaque à cœur, dans la zone centrale) comprend de préférence de la silice $SiO_2$ à une teneur pondérale allant de 49 à 75%, de l'alumine $Al_2O_3$ à une teneur pondérale allant de 15 à 30% et de l'oxyde de lithium $Li_2O$ à une teneur pondérale allant de 1 à 8% (d'autres composants pouvant également être présents comme précisé ultérieurement). La présence d'oxyde de lithium dans la composition initiale (et conservée dans la zone centrale), en combinaison avec l'alumine, permet de cumuler un grand nombre d'avantages, notamment en matière de résistance aux chocs thermiques, rendant ces compositions particulièrement attrayantes pour l'application visée. La composition chimique du verre utilisé est en outre préférentiellement exempte d'oxyde de bore ($B_2O_3$).

La zone superficielle (ou zone d'échange) chargée en ions potassium (en remplacement notamment des ions lithium) de la plaque selon l'invention est, sur chaque face de la plaque, la zone allant de la surface de la plaque jusqu'à la profondeur d'échange ou profondeur limite sur laquelle l'échange par les ions potassium se fait. Cette zone est ainsi celle dans laquelle le taux de potassium (exprimé en pourcentages pondéraux d'oxydes de potassium) est supérieur au taux de potassium dans la zone centrale (dans laquelle le taux d'oxydes de potassium est celui correspondant à celui de la composition d'aluminosilicate de lithium choisie initialement pour former le verre), et préférentiellement est la zone, à partir de la surface de la plaque, en tout point de laquelle le taux de potassium est supérieur d'au moins 0.5% en poids par rapport au taux de potassium dans la zone centrale (ou au cœur ou au milieu ou au centre) de la plaque (c'est-à-dire que la différence $\Delta[K_2O]$ entre la concentration en $K_2O$ en un point quelconque ou à une épaisseur quelconque de cette zone et la concentration en $K_2O$ au cœur de la plaque est d'au moins 0.5% en poids). En d'autres termes, cette zone superficielle est préférentiellement la zone allant de la surface de la plaque à la profondeur limite de la plaque à partir de laquelle la différence entre le taux de potassium à cette profondeur et celui au cœur de la plaque devient inférieure à 0.5%.

Avantageusement, l'épaisseur de la zone superficielle définie selon l'invention est comprise entre 6 et 120 μm (selon la méthode de mesure par prise de poids explicitée ci-après), préférentiellement entre 20 et 90 μm, en particulier entre 40 et 80 μm, voire de 50 à 70 μm dans la présente invention, celle de la zone centrale étant généralement d'au moins 1.5 mm.

L'épaisseur de la zone superficielle ou profondeur d'échange H (en micromètres) est déterminée à l'aide de mesures de la masse de l'échantillon avant et après trempe chimique (ou méthode de mesure par prise de poids). Plus précisément, la profondeur H est donnée par la formule suivante:

$$H = \frac{\Delta m}{m} \frac{M}{\Delta M} \frac{\sqrt{\pi}\, e}{\alpha}$$

Dans cette formule, m est la masse de l'échantillon avant trempe, $\Delta m$ est la variation de masse due à la trempe, M est la masse molaire du verre avant trempe, $\Delta M$ est la différence de masse molaire entre les oxydes alcalins entrant dans le verre (dans la présente invention les oxydes de potassium) et ceux sortant du verre pour l'échange considéré (dans la présente invention, les oxydes de lithium), e est l'épaisseur du verre, et $\alpha$ est la concentration molaire initiale des oxydes alcalins sortant du verre lors de l'échange.

Généralement, le taux de remplacement des ions lithium par les ions potassium décroît (progressivement) depuis la surface du verre (où le remplacement des ions lithium par les ions potassium est le cas échéant total, c'est-à-dire de 100%, ou quasi-total (au moins 95 %) jusqu'à la limite opposée de la zone superficielle (où le taux d'oxydes de potassium venant en remplacement des oxydes de lithium devient inférieur à 0.5% en poids). Le taux de potassium en surface du verre et en tout point de l'épaisseur de la zone superficielle est ainsi supérieur au taux de potassium dans la zone centrale, comme indiqué précédemment. Avantageusement le taux de potassium (exprimé en pourcentages pondéraux d'oxydes (oxyde de potassium), étant communément sous cette forme dans la composition) en surface du verre de la plaque selon l'invention est supérieur d'au moins 3% en poids par rapport au taux de potassium dans la zone centrale (c'est-à-dire $\Delta_S[K_2O] = [K_2O]_S - [K_2O]_C \geq 3\%$, $[K_2O]_S$ étant la concentration en $K_2O$, exprimée en pourcentages pondéraux, en surface et $[K_2O]_C$ étant la concentration en $K_2O$ au cœur de la plaque), et en particulier est supérieur de 5 à 14% en poids par rapport au taux de potassium dans la zone centrale, ce taux étant mesuré par l'intermédiaire d'une microsonde électronique. En outre, le taux de potassium sur une épaisseur de 5 $\mu$m (au moins) à partir de la surface du verre reste avantageusement relativement constant (il diminue de moins de 30%, en considérant le rapport entre le taux après vieillissement et le taux initial) après vieillissement, quel que soit le vieillissement en conditions normales d'utilisation, en particulier après chauffage à 350°C pendant 1000 h ; il reste également constant (il diminue de moins de 10 % ou 15%) après vieillissement dû à une surchauffe accidentelle, en particulier après chauffage à 450°C pendant 10 minutes.

Avantageusement, la plaque de verre définie selon l'invention est telle que la contrainte à rupture (ou résistance à la rupture) en flexion à un test « anneau sur tripode » (tel que décrit ci-après) est d'au moins 400 MPa, de préférence d'au moins 500 MPa, en particulier d'au moins 550 MPa, et le cas échéant d'au moins 600 MPa pour ladite plaque, que cette contrainte soit mesurée avant ou après vieillissement.

En particulier, la contrainte à la rupture en flexion (au test anneau sur tripode) est d'au moins 550 MPa, de préférence d'au moins 600 MPa, en particulier d'au moins 700 MPa, voire d'au moins 750 MPa pour ladite plaque non détrempée (c'est-à-dire sur la plaque non soumise à de nouveaux traitements thermiques après sa fabrication).

La contrainte à la rupture en flexion est en outre, de façon surprenante et avantageuse, d'au moins 400 MPa, en particulier d'au moins 500 MPa, notamment d'au moins 550 MPa, voire d'au moins 600 MPa pour ladite plaque après chauffage à 350°C pendant 1000 h (simulant une utilisation normale d'une plaque à induction durant 5 ans). De façon surprenante et avantageuse également, la contrainte à la rupture en flexion est également d'au moins 550 MPa, en particulier d'au moins 600 MPa, voire d'au moins 650 MPa, notamment d'au moins 700 MPa pour ladite plaque après chauffage à 450°C pendant 10 minutes (simulant un évènement accidentel de surchauffe de la plaque).

Les plaques selon l'invention conservent donc de façon surprenante leur résistance mécanique (et les effets de leur renforcement par échange ionique) après la détrempe découlant généralement de l'utilisation du verre dans une application telle que celle des plaques de cuisson par induction (contrairement notamment aux plaques d'aluminosilicate de lithium habituellement renforcées par échange ionique au sodium perdant leur renforcement mécanique lorsqu'elles sont exposées à un vieillissement thermique pendant une durée significative, comme illustré ultérieurement). L'invention concerne ainsi une plaque, destinée à couvrir ou recevoir des éléments de chauffage par induction, cette plaque étant une plaque en verre dont la composition est de type aluminosilicate de lithium, telle qu'elle présente une contrainte à rupture en flexion à un test « anneau sur tripode » d'au moins 400 MPa, de préférence d'au moins 500 MPa, en particulier d'au moins 550 MPa, et le cas échéant d'au moins 600 MPa, avant et après vieillissement, en particulier après chauffage à 350°C pendant 1000h ou après chauffage à 450°C pendant 10 minutes.

Le test de flexion par la méthode anneau sur tripode est réalisé à l'aide d'une machine Instron 4400R, réglée avec une vitesse de descente de la traverse de 2 mm/min, instrumentée avec un capteur de force de 10 kN, d'un anneau de 10 mm de diamètre avec un tore de 1 mm de rayon, fixée en bout de la machine Instron, et d'un socle sur lequel sont fixées 3 billes de rayon 5 mm, disposées à 120° sur un cercle de 20 mm de rayon et dont le centre est confondu avec le centre de l'anneau.

L'éprouvette de 70 mm x 70 mm de dimensions est placée entre ces 3 billes et l'anneau, de telle manière que le centre de l'éprouvette soit aligné avec le centre de l'anneau, à 1 mm près. On applique alors sur l'anneau une force croissante jusqu'à la rupture de l'éprouvette. Seules les éprouvettes dont l'origine de rupture est sous l'anneau sont comptabilisées. La contrainte de rupture en fonction de la force à rupture et de l'épaisseur de l'éprouvette est donnée par la formule suivante :

$$\sigma_{(MPa)} = \frac{0,847 \times Force_{(N)}}{épaisseur_{(mm)}^2}$$

La plaque de verre selon l'invention présente également une contrainte à cœur (dans la zone centrale) comprise entre 2 et 80 Mpa pour une épaisseur comprise entre 1.5 et 6 mm. Cette contrainte à cœur ($S_c$) est tirée du profil de contrainte, déterminé à l'aide d'un microscope polarisant équipé d'un compensateur de Babinet. Une telle méthode est décrite par H. Aben et C. Guillemet, dans « Photoelasticity of glass », Springer Verlag, 1993, pp 65, 123, 124, 146).

Avantageusement également, la plaque de verre définie selon l'invention présente une résistance améliorée à la rayure se traduisant par le fait que sa surface reste dénuée d'écailles après application d'une pointe Vickers en diamant (de géométrie définie selon la norme ISO 6507 ou C1327) sous une force de 1 N (ou moins), ce test étant effectué en appliquant la pointe avec une force constante (différentes forces croissantes étant généralement testées jusqu'à la constatation de l'apparition d'écailles, c'est-à-dire de verre arraché sur une largeur d'au moins 100 $\mu$m par rapport à la ligne d'application de la pointe) sur la plaque de verre et en la déplaçant à une vitesse de 2 m/min sur une longueur d'1 mm, à température ambiante. La résistance améliorée à la rayure de la plaque de verre définie selon l'invention se traduit également par le fait que sa surface est dénuée de fissurations latérales (en forme de fers à cheval (ou cônes de Hertz) après application d'une bille Erichsen (sphère en acier de 500 $\mu$m de diamètre) sous une force de 20 N (ou moins), voire de 30 N, ce test étant également effectué en appliquant la bille avec une force constante (différentes forces croissantes étant testées jusqu'à la constatation de l'apparition de fissures latérales par rapport à la ligne d'application de la bille) sur la plaque de verre et en la déplaçant à une vitesse de 2 m/min sur une longueur d'1 mm, à température ambiante.

De préférence selon l'invention, la composition chimique du verre de la plaque (initialement avant échange, cette composition étant également celle au cœur de la plaque après échange) comprend (ou consiste essentiellement en) les constituants suivants, variant dans les limites pondérales ci-après définies : $SiO_2$: 49 - 75 % ; $Al_2O_3$: 15 - 30 % ; $Li_2O$ : 1 - 8 % ; $K_2O$ : 0 - 5 % ; $Na_2O$ : 0 - 5 % ; ZnO : 0 - 5 % ; MgO : 0 - 5 %; CaO : 0 - 5%; BaO : 0 - 5 %; SrO : 0 - 5 %; $TiO_2$ : 0 - 6 %; $ZrO_2$ : 0 - 5 %; $P_2O_5$ : 0 - 10 % ; $B_2O_3$ : 0 - 5% (et de préférence 0).

Une composition chimique (initiale ou au cœur de la plaque) particulièrement préférée comprend (ou consiste essentiellement en) les constituants suivants, variant dans les limites pondérales ci-après définies : $SiO_2$ : 52 - 75 % ; $Al_2O_3$ : 18 - 27 % ; $Li_2O$ : 1.5 - 5.5 % ; $K_2O$ : 0 - 3 % ; $Na_2O$ : 0 - 3 % ; ZnO : 0 - 3.5 % ; MgO : 0 - 3 %; CaO : 0 - 4.5%; BaO : 0 - 3.5 %; SrO : 0 - 2 %; $TiO_2$ : 0 - 5.5 %; $ZrO_2$ : 0 - 3 %; $P_2O_5$ : 0 - 8 % ; $B_2O_3$ : 0 - 3% (et de préférence 0).

Dans les compositions précédentes, la silice ($SiO_2$) est le principal oxyde formateur du verre, de fortes teneurs contribuant à augmenter la viscosité du verre au-delà de ce qui est acceptable, et des teneurs trop faibles augmentant le coefficient de dilatation thermique. L'alumine ($Al_2O_3$) contribue également à augmenter la viscosité du verre et à diminuer son coefficient de dilatation. Même si la présence d'autres oxydes alcalins n'est pas exclue (par exemple $Na_2O$, les ions sodium pouvant également le cas échéant être remplacés par des ions potassium en surface), l'oxyde de lithium ($Li_2O$) est de préférence le seul oxyde alcalin présent dans la composition (mis à part les impuretés inévitables). De trop fortes teneurs augmentent cependant la tendance du verre à dévitrifier. Les oxydes alcalins permettent de fluidifier le verre et donc de faciliter sa fusion et son affinage, l'oxyde de lithium permettant en outre de maintenir de faibles coefficients de dilatation thermique par rapport aux autres oxydes alcalins. Les oxydes alcalino-terreux ainsi que l'oxyde de baryum (BaO) sont utiles pour faciliter la fusion du verre et son affinage, de par leur effet de réduction de la viscosité à haute température.

L'expression « consiste essentiellement en » doit être comprise en ce sens que les oxydes précités constituent au moins 96%, voire 98% du poids du verre. La composition peut également comprendre des additifs servant généralement à l'affinage du verre ou à la coloration du verre. Les agents d'affinage sont typiquement choisis parmi les oxydes d'arsenic, d'antimoine, d'étain, de cérium, les halogènes, les sulfures métalliques, notamment le sulfure de zinc. La teneur pondérale en agents d'affinage est normalement d'au plus 1%, de préférence entre 0,1 et 0,6%. Les agents de coloration sont l'oxyde de fer, présent comme impureté dans la plupart des matières premières, l'oxyde de cobalt, de chrome, de cuivre, de vanadium, de nickel, le sélénium. La teneur pondérale totale en agents de coloration est normalement d'au plus 2%, voire 1%. L'introduction d'un ou de plusieurs de ces agents peut conduire à obtenir une plaque de verre sombre, de très faible transmission lumineuse (typiquement d'au plus 3%, notamment 2% et même 1%), qui présentera l'avantage de dissimuler les inducteurs, le câblage électrique, ainsi que les circuits de commande et de contrôle du dispositif de cuisson. Une autre alternative, décrite plus loin dans le texte, consiste à munir une partie de la surface de la plaque d'un revêtement opaque ou substantiellement opaque, ou à disposer un matériau opaque, de préférence de couleur sombre, entre la plaque et les éléments internes du dispositif.

De préférence, le coefficient de dilatation thermique linéaire du verre (mesuré selon la norme ISO 7991 :1987 entre 20 et 300°C) est d'au plus $70.10^{-7}$/K, notamment est compris entre $30.10^{-7}$/K et $50.10^{-7}$/K. Les coefficients de dilatation thermique élevés ne permettent pas d'obtenir une résistance au choc thermique suffisante. En revanche, un coefficient de dilatation thermique trop faible peut réduire le renforcement observé.

Comme indiqué précédemment, les plaques selon l'invention peuvent avantageusement être des plaques minces, mais aussi des plaques de grandes dimensions latérales, plaques qui sont les plus susceptibles de casser. L'épaisseur de la plaque est notamment d'au plus 4,5 mm, en particulier inférieure ou égale à 4 mm, voire à 3.5 mm, voire inférieure ou égale à 3 mm comme indiqué précédemment. L'épaisseur est généralement d'au moins 1.5 mm, en particulier d'au moins 2 mm. La plaque en verre présente de préférence une dimension latérale d'au moins 0,5 m, voire 0,6 m. La dimension la plus grande est généralement d'au plus 1,50 m.

Les plaques peuvent être fabriquées de manière connue par fusion de matières premières pulvérulentes puis formage du verre obtenu. La fusion est typiquement réalisée dans des fours réfractaires à l'aide de brûleurs utilisant comme comburant de l'air ou de l'oxygène, et comme combustible du gaz naturel ou du fioul. Des résistances en molybdène ou en platine immergées dans le verre en fusion peuvent également apporter toute ou partie de l'énergie utilisée pour obtenir un verre fondu. Des matières premières (silice, spodumène, pétalite etc.) sont introduites dans le four et subissent sous l'effet des hautes températures diverses réactions chimiques, telles que des réactions de décarbonatation, de fusion proprement dite... La température maximale atteinte par le verre est typiquement d'au moins 1500°C, notamment comprise entre 1600 et 1700°C. Le formage du verre en plaques peut se faire de manière connue par laminage du verre entre des rouleaux métalliques ou céramiques, ou encore par flottage, technique consistant à déverser le verre fondu sur un bain d'étain en fusion.

Le renforcement par échange ionique au potassium est réalisé en trempant les plaques de verre ainsi formées dans au moins un, préférentiellement un seul, bain de sels de potassium (les sels de potassium pouvant être seuls ou en mélange avec d'autres sels, par exemple d'argent ou de sodium), par exemple un bain contenant du nitrate de potassium, en particulier un bain constitué à 100% de nitrate de potassium, ce bain étant chauffé de préférence à une température d'au moins 360°C pendant au moins 8h afin d'obtenir la plaque renforcée selon l'invention. Le bain est généralement obtenu en chauffant le ou les sels choisis (le cas échéant solides à température ambiante), par exemple dans une cuve en acier et à l'aide de résistances chauffantes, jusqu'à la température désirée. Cette température de bain est préférentiellement comprise entre 360°C et 500°C, en particulier comprise entre 400°C et 500 °C, notamment entre 450°C (voire 460°C) et 500°C, dans la présente invention, le temps de maintien du verre dans le bain étant également préférentiellement compris entre 8 h et 72 h, en particulier compris entre 16 et 32 h, voire entre 16 et 24h, afin d'obtenir la plaque renforcée selon l'invention. Le cas échéant, les verres peuvent avoir été préchauffés, par exemple en les maintenant plusieurs minutes (en particulier une dizaine de minutes) au-dessus du bain de sels fondus porté en température, avant d'être plongés dans le bain. Le bain de sels de potassium fondus est ensuite maintenu en température tout le temps du traitement (en particulier entre 8 à 72 h, notamment entre 16 et 24h), puis les verres sont retirés du bain, refroidis (le refroidissement s'opérant par exemple à température ambiante en laissant reposer les verres dans la pièce de trempe sur un support, par exemple un support métallique de type panier en acier), puis le cas échéant rincés (notamment pour enlever les sels refroidis formant une pellicule à la surface du verre), par exemple à l'eau ou avec un autre solvant, avant séchage éventuel (par exemple à température ambiante dans la pièce ou par jet d'air, etc.).

Comme indiqué ci-avant, le renforcement mécanique particulièrement satisfaisant et pérenne obtenu pour les plaques selon l'invention permet au besoin de réduire l'épaisseur des plaques utilisées tout en conservant une bonne résistance mécanique. Il est préférable que la plaque de verre reste cependant apte à dissimuler les inducteurs, le câblage électrique, ainsi que les circuits de commande et de contrôle du dispositif de cuisson, seuls les dispositifs d'affichage restant préférentiellement visibles par l'utilisateur. Notamment lorsque la transmission de la plaque de verre en tant que telle est élevée (en particulier au-delà de 3%) et/ou lorsque les colorants présents le cas échéant dans le verre ne permettent pas d'opacifier suffisamment la plaque, il est possible de munir au moins une partie de la surface de la plaque (notamment celle qui dans le dispositif de cuisson est située au regard des éléments à dissimuler) d'un revêtement (déposé par exemple sur la plaque renforcée, en ligne après sa fabrication ou en reprise), ledit revêtement ayant la capacité d'absorber et/ou de réfléchir et/ou de diffuser le rayonnement lumineux. Le revêtement peut être déposé sous la plaque, c'est-à-dire sur la surface destinée à être placée en regard des éléments internes du dispositif, aussi appelée « face inférieure », et/ou sur la plaque, c'est-à-dire sur la face opposée ou face supérieure. Ce revêtement peut être continu ou discontinu (par exemple présenter des motifs, ou une trame), ou discontinu dans certaines zones, par exemple au niveau des éléments chauffants, et continu ailleurs, une ou plusieurs zones non revêtues pouvant également être prévues au regard par exemple des dispositifs émettant de la lumière (ces zones pouvant également être revêtues par un revêtement non opaque). La transmission lumineuse de la plaque dans les zones revêtues est de préférence d'au plus 0,5%, voire d'au plus 0,2%, le revêtement pouvant également être totalement opaque.

La plaque peut également comporter un revêtement décoratif non nécessairement destiné à masquer les éléments internes du dispositif de cuisson, ce décor permettant par exemple d'identifier les zones de chauffe, les zones de commande (notamment les touches sensitives), d'apporter des informations, de représenter un logo, etc.

Le ou les revêtements peuvent être par exemple une ou des couches à base organique, telle qu'une couche de peinture ou de laque, ou une ou des couches à base minérale, telle qu'un émail ou une couche métallique ou d'un oxyde, nitrure, oxynitrure, oxycarbure d'un métal. De préférence, les couches organiques sont déposées en face inférieure, tandis que les couches minérales, notamment les émaux, sont déposées en face supérieure.

La peinture pouvant être utilisée est avantageusement choisie de façon à résister à de hautes températures, à conserver sa couleur et sa cohésion avec la plaque, et de façon à ne pas affecter les propriétés mécaniques de la plaque. Elle présente avantageusement une température de dégradation supérieure à 300°C, en particulier entre 350°C et 700°C. Elle est généralement à base de résine(s) (par exemple une résine silicone, modifiée le cas échéant par l'incorporation d'un radical tel qu'un alkyde ou phényle ou méthyle, etc), le cas échéant chargée (par exemple en pigment(s) ou colorant(s)), et éventuellement diluée pour ajuster sa viscosité en vue de son application sur la plaque, le diluant ou le solvant (par exemple du white spirit, du toluène, des solvants de type hydrocarbures aromatiques, comme le solvant commercialisé sous la marque Solvesso 100® par la société Exxon, etc.) étant le cas échéant éliminé lors de la cuisson ultérieure de la peinture.

Les pigments présents peuvent être par exemple des pigments pour émaux (de type oxydes métalliques ou chromates, par exemple oxydes de chrome, de cuivre, de fer, de cobalt ou de nickel, ou chromates de cuivre ou de cobalt, etc.), des particules d'un ou de métaux ou des alliages métalliques. Les pigments peuvent aussi être « à effet » (pigments à effet métallique, interférentiels, ou nacrés, etc.), notamment les pigments sous forme de paillettes d'oxyde d'aluminium ($Al_2O_3$) revêtues par des oxydes métalliques ou ceux à base de particules de mica revêtues par des oxydes ou combinaison d'oxydes.

La peinture utilisée comprend de préférence au moins (ou est à base de) un (co)polymère résistant à haute température (en particulier présentant une température de dégradation supérieure à 400°C), par exemple comprend une ou plusieurs des résines suivantes : résine polyimide, polyamide, polyfluorée, polysilsesquioxane et/ou polysiloxane. Les résines polysiloxanes sont particulièrement avantageuses. Ces résines peuvent être utilisées en l'état réticulable ou transformées (réticulées ou pyrolysées). Elles présentent avantageusement des motifs phényle, éthyle, propyle et/ou vinyle, et sont notamment choisies parmi les polydiméthylsiloxanes, les polydiphénylsiloxanes, les polymères de phénylméthylsiloxane et les copolymères de diméthylsiloxane-diphénylsiloxane. Les résines Dow Corning® 804, 805, 806, 808, 840, 249, 409 HS et 418 HS, Rhodorsil® 6405 et 6406 de Rhodia, Triplus® de General Electric Silicone et SILRES® 604 de Wacker Chemie GmbH conviennent notamment parfaitement. Les résines ainsi choisies sont notamment aptes à résister au chauffage par induction.

La peinture peut être exempte de charges minérales, notamment si son épaisseur reste faible, ou peut comprendre de telles charges, pour renforcer notamment la couche de peinture, contribuer à sa cohésion, lutter contre l'apparition et la propagation de fissures en son sein, etc (une partie de ces charges étant de préférence à structure lamellaire), les charges pouvant également intervenir dans la coloration. Le taux de charges minérales peut être notamment de 10 à 60% en volume, plus particulièrement de 15 à 30% (taux volumiques basés sur le volume total des charges et de la peinture).

L'épaisseur de chaque couche de peinture déposée peut être comprise entre 1 et 100 microns, notamment entre 5 et 50 microns. L'application de la peinture peut s'effectuer par toute technique adaptée (à la brosse, à la raclette, par pulvérisation, dépôt électrostatique, trempage, dépôt au rideau, par sérigraphie, jet d'encre etc.) et se fait de préférence par sérigraphie. Le dépôt peut être suivi par un traitement thermique destiné à assurer selon les cas le séchage, la réticulation, la pyrolyse, etc. de la ou des couches déposées.

La ou les couches de peinture peuvent le cas échéant être recouvertes d'une couche de protection, par exemple en résine silicone modifiée par des radicaux alkyles ou résine polysiloxane.

Comme indiqué précédemment, le revêtement peut également être au moins un émail. L'émail est formé à partir d'une poudre comprenant une fritte de verre et des pigments (ces pigments pouvant également faire partie de la fritte), et d'un médium pour l'application sur le substrat. La fritte de verre est de préférence obtenue à partir d'un mélange vitrifiable comprenant généralement des oxydes choisis notamment parmi les oxydes de silicium, de zinc, de sodium, de bore, de lithium, de potassium, de calcium, d'aluminium, de magnésium, de baryum, de strontium, d'antimoine, de titane, de zirconium, de bismuth. Les pigments peuvent être choisis parmi ceux cités précédemment en relation avec la peinture, le taux de pigment(s) dans l'ensemble fritte(s)/pigment(s) étant par exemple compris entre 30 et 60 % en poids.

La couche peut être notamment déposée par sérigraphie (la base et les pigments étant le cas échéant mis en suspension dans un médium généralement destiné à se consumer dans une étape de cuisson ultérieure, ce médium pouvant notamment comporter des solvants, des diluants, des huiles, des résines, etc), l'épaisseur de la couche étant par exemple de l'ordre de 1 à 6 $\mu m$ (l'épaisseur n'excédant pas généralement 6 $\mu m$, en particulier n'excédant 3 $\mu m$.) La technique de sérigraphie est avantageuse en ce qu'elle permet notamment de réserver certaines zones de la plaque, notamment les zones qui seront en regard des dispositifs émettant de la lumière.

Le revêtement peut encore être au moins une couche métallique ou d'un oxyde, nitrure, oxynitrure, oxycarbure d'un métal. Par « couche » on comprend également les empilements de couches. Cette couche peut être par exemple une couche simple métallique ou essentiellement métallique (par exemple une couche mince d'Ag, W, Ta, Mo, Ti, Al, Cr, Ni, Zn, Fe, ou d'un alliage de métaux, ou à base d'aciers inoxydables, etc.), ou peut être un empilement de (sous) couches comprenant une ou plusieurs couches métalliques, par exemple une couche métallique (ou essentiellement métallique) protégée (revêtue sur au moins une face et de préférence sur ses deux faces opposées) par au moins une couche à base de matériau diélectrique (par exemple au moins une couche en argent ou en aluminium revêtue d'au moins une couche de protection en $Si_3N_4$ - en particulier un empilement $Si_3N_4$/métal/$Si_3N_4$ - ou en $SiO_2$).Il peut alternativement s'agir d'un revêtement monocouche à base de matériau diélectrique à fort indice de réfraction n, c'est-à-dire supérieur à 1,8, de préférence supérieur à 1,95, en particulier supérieur à 2. La couche peut également être formée d'un empilement de (sous) couches minces à base de matériau(x) diélectrique(s) alternativement à forts (de préférence supérieur à 1,8, voire 1,95, voire 2) et faibles (de préférence inférieur à 1,65) indices de réfraction, notamment de matériau(x) de type oxyde métallique (ou nitrure ou oxynitrure de métaux), ou oxyde mixte (étain-zinc, zinc-titane, silicium-titane, etc.) ou alliage, etc., la (sous) couche déposée le cas échéant en premier et se trouvant contre la face intérieure de la plaque étant avantageusement une couche de fort indice de réfraction.

Comme matériau de (sous) couche à fort indice de réfraction, on peut citer par exemple $TiO_2$ ou éventuellement $SnO_2$, $Si_3N_4$, $Sn_xZn_yO_z$, $TiO_x$ ou $Si_xTi_yO_z$, $ZnO$, $ZrO_2$, $Nb_2O_5$ etc. Comme matériau de (sous) couche à faible indice de réfraction, on peut citer par exemple $SiO_2$, ou éventuellement un oxynitrure et/ou un oxycarbure de silicium, ou un oxyde mixte de silicium et d'aluminium, ou un composé fluoré par exemple de type $MgF_2$ ou $AlF_3$, etc.

L'épaisseur (géométrique) de chaque couche à base de couche(s) mince(s) déposée est généralement comprise entre 15 et 1000 nm, en particulier 20 et 1000 nm, l'épaisseur de chacune des (sous) couches (dans le cas d'un empilement) pouvant varier entre 5 et 160 nm, généralement entre 20 et 150 nm. La couche à base de couche(s) mince(s) peut être appliquée sur la plaque en ligne ou en reprise (par exemple après découpe et/ou façonnage de ladite plaque), notamment par pyrolyse, par évaporation, ou par pulvérisation. De préférence, elle est déposée par pulvérisation et/ou par une méthode de dépôt sous vide et/ou assistée par plasma, notamment par pulvérisation cathodique (magnétron), notamment assistée par champ magnétique, les oxydes ou nitrures étant déposés à partir de cible(s) de métal ou d'alliage ou de silicium ou céramique(s), etc. appropriées, si nécessaire dans des conditions oxydantes ou nitrurantes (mélanges le cas échéant d'argon/oxygène ou d'argon/azote).

Comme indiqué précédemment, la présente invention concerne également un dispositif de cuisson par induction comprenant au moins au moins une plaque (munie d'un revêtement opacifiant tel que décrit dans les paragraphes précédents, ou non) selon l'invention et au moins un inducteur (en particulier disposé sous ladite plaque). Outre ladite plaque et le ou les inducteurs, le dispositif de cuisson peut également comprendre au moins un dispositif émettant de la lumière, ainsi qu' au moins un dispositif de commande et de contrôle, l'ensemble étant généralement compris dans un caisson.

Le ou les dispositifs émettant de la lumière sont avantageusement choisis parmi les diodes électroluminescentes (par exemple faisant partie d'afficheurs à 7 segments), les afficheurs à cristaux liquides (LCD), à diodes électroluminescentes, éventuellement organiques (OLED), les afficheurs fluorescents (VFD), les couleurs vues au travers de la plaque pouvant être variées (rouge, vert, bleu, et toutes les combinaisons possibles dont le jaune, le violet, le blanc, etc.). Ces dispositifs peuvent être décoratifs et/ou peuvent le cas échéant afficher diverses informations utiles pour l'utilisateur, notamment puissance de chauffe, température, programmes de cuisson, temps de cuisson, zones de la plaque dépassant une température prédéterminée, etc.

Les dispositifs de commande et de contrôle peuvent notamment être mécaniques ou comprendre avantageusement des touches sensitives, par exemple du type capacitif ou à infrarouge.

L'ensemble des éléments internes est généralement fixé à un caisson, souvent métallique, qui constitue par exemple la partie inférieure du dispositif de cuisson, normalement dissimulé dans le plan de travail ou dans le corps de la cuisinière. Alternativement au revêtement plus ou moins opacifiant explicite précédemment déposé sur la plaque, un matériau ou élément, en particulier opacifiant, peut également être disposé entre la plaque et les éléments internes du dispositif, afin de masquer notamment au moins une partie des éléments internes

Les exemples qui suivent illustrent l'invention sans toutefois la limiter, en présentant les résultats obtenus avec des plaques en verre selon la présente invention (exemple 1) en comparaison avec un exemple de référence portant sur des plaques en verre de même composition initiale mais renforcées par échange au sodium.

Exemple selon l'invention :

Dans cet exemple, on a fabriqué de manière connue par fusion et formage par laminage une feuille de verre d'aluminosilicate de lithium de 3 mm d'épaisseur présentant la composition pondérale suivante :

| | |
|---|---|
| $SiO_2$ | 67.4 % |
| $Al_2O_3$ | 20.0 % |
| $Li_2O$ | 3.45 % |
| $Na_2O$ | 0.15 % |
| $K_2O$ | 0.2% |
| $ZnO$ | 1.6 % |
| $MgO$ | 1.25 % |
| $TiO_2$ | 2.6 % |
| $ZrO_2$ | 1.7 % |
| $As_2O_3$ | 0.8% |
| $BaO$ | 0.8% |
| $Fe_2O_3$ | 0.019% |

Le coefficient de dilatation linéaire du verre était de 41. $10^{-7}$/K.

Des plaques de 70X70 mm ont été découpées à partir de cette feuille de verre puis trempées dans un bain de nitrate de potassium pendant 32 h à 460 °C, afin d'obtenir une profondeur d'échange (épaisseur de la zone superficielle, renforcée au potassium, selon l'invention, et évaluée par la méthode de prise de poids) de 50

μm.

Les plaques de verre ont ensuite été refroidies à température ambiante de 20°C, puis rincées à l'eau, puis séchées à température ambiante de 20°C.

Le taux de potassium a ensuite été mesuré en surface du verre à l'aide d'une microsonde électronique pour les plaques obtenues, le taux mesuré étant de 9% dans cet exemple, la différence $\Delta_S[K_2O]$ entre le taux de potassium en surface du verre ($[K_2O]_S$ = 9% en poids) et le taux de potassium au coeur de la plaque ($[K_2O]c$ = 0.2% en poids) étant ainsi de 8.8% environ. La contrainte à rupture en flexion au test anneau sur tripode a également été évaluée sur lesdites plaques avant détrempe, les valeurs obtenues sur 10 plaques testées étant comprises entre 740 MPa et 820 MPa. La contrainte à cœur a également été évaluée, cette contrainte étant de 5 MPa.

Des tests de détrempe ont ensuite été réalisés sur ces verres. Deux cas de détrempe ont été envisagés : un séjour de 1000 h dans un four à 350°C simulant une utilisation normale d'une plaque à induction d'épaisseur 3 mm durant 5 ans, et un séjour de 10 minutes dans un four à 450°C simulant un évènement accidentel de surchauffe de la plaque. Les contraintes à rupture au test de flexion à l'anneau ont ensuite été évaluées. Les valeurs obtenues sur 5 plaques testées étaient comprises entre 600 et 700 MPa après chauffage à 350°C pendant 1000h et étaient comprises entre 680 et 820 MPa après chauffage à 450°C pendant 10 minutes.

Malgré une perte de résistance mécanique mesurée sur les verres détrempés 1000h à 350°C, on reste malgré tout largement au-dessus de la performance requise à cette épaisseur (et même à des épaisseurs moindres par exemple de 1.6 mm) pour l'application plaque de cuisson, la résistance mécanique n'étant en outre quasiment pas affectée par la détrempe de 10 minutes à 450°C.

Les plaques de verre obtenues ont également été soumises à des tests de rayures. Leur surface est restée dénuée d'écailles après application d'une pointe Vickers sous une force de 1 N (contre 0.5 N pour les mêmes verres non renforcés) et est restée dénuée de fissurations latérales après application d'une bille Erichsen sous une force de 30 N (contre 10 à 15 N pour les mêmes verres non renforcés).

Exemple de référence :

On a procédé comme dans l'exemple précédant en opérant cette fois la trempe à 395°C pendant 4 h (la trempe étant beaucoup plus rapide que dans le cas du potassium), l'épaisseur de la zone superficielle de la plaque renforcée au sodium obtenue selon cet exemple comparatif étant de 130 μm.

Le taux de sodium mesuré (par microsonde électronique) en surface du verre pour les plaques obtenues était de 6%. La contrainte à rupture en flexion au test anneau sur tripode a également été évaluée avant détrempe, les valeurs obtenues sur 2 plaques testées étant comprises entre 450 MPa et 600 MPa. La contrainte à cœur a également été évaluée, cette contrainte étant de 14 MPa.

Des tests de détrempe ont ensuite été réalisés et les contraintes à rupture au test de flexion à l'anneau ont été évaluées. Les valeurs obtenues sur 5 plaques testées étaient comprises entre 90 et 300 MPa après chauffage à 350°C pendant 1000h. On a ainsi constaté un effet beaucoup plus sévère de la détrempe par rapport au verre renforcé au potassium selon l'invention, rendant ces plaques bien moins appropriées à l'utilisation comme plaques de cuisson.

Les plaques de verre selon l'invention servent comme plaques de cuisson à induction, par exemple destinées à être intégrées dans un plan de travail ou une cuisinière, ou un caisson fixe ou portatif.

**Revendications**

1. Plaque de cuisson par induction, destinée à couvrir ou recevoir des éléments de chauffage par induction, ladite plaque étant une plaque en verre dont la composition est de type aluminosilicate de lithium, ladite plaque présentant une zone superficielle d'au moins 5 μm d'épaisseur comprenant des ions potassium en remplacement des ions lithium du verre.

2. Plaque à induction selon la revendication 1, telle que l'épaisseur de la zone superficielle est comprise entre 6 et 120 μm, préférentiellement entre 20 et 90 μm, en particulier entre 40 et 80 μm, voire de 50 à 70 μm.

3. Plaque à induction selon l'une des revendications 1 à 2, telle que le taux de potassium en surface du verre et en tout point de l'épaisseur de la zone superficielle est supérieur au taux de potassium dans la zone centrale, en particulier est supérieur d'au moins 0.5% en poids par rapport au taux de potassium dans la zone centrale.

4. Plaque à induction selon l'une des revendications 1 à 3, telle que le taux de potassium à la surface du verre est supérieur d'au moins 3% en poids par rapport au taux de potassium dans la zone centrale.

5. Plaque à induction selon l'une des revendications 1 à 4, telle que le taux de potassium sur une épaisseur de 5 μm à partir de la surface du verre diminue de moins de 30 % après chauffage à 350°C pendant 1000 h.

6. Plaque à induction selon l'une des revendications 1 à 5, telle que sa contrainte à rupture en flexion est d'au moins 400 MPa, de préférence d'au moins 500 MPa, en particulier d'au moins 550 MPa, et le cas échéant d'au moins 600 MPa, avant et après vieillissement, en particulier après chauffage à 350°C pendant 1000h ou après chauffage à 450°C pendant 10 minutes.

7. Plaque à induction selon l'une des revendications 1 à 6, telle que sa contrainte à rupture en flexion avant détrempe est d'au moins 550 MPa, de préférence d'au moins 600 MPa, en particulier d'au moins 700 MPa, voire d'au moins 750 MPa.

8. Plaque à induction selon l'une des revendications 1 à 7, telle que sa contrainte à rupture en flexion est d'au moins 400 MPa, en particulier d'au moins 500 MPa, notamment d'au moins 550 MPa, voire d'au moins 600 MPa après chauffage à 350°C pendant 1000h, et/ou est d'au moins 550 MPa, en particulier d'au moins 600, voire d'au moins 650 MPa, notamment d'au moins 700 MPa pour ladite plaque après chauffage à 450°C pendant 10 minutes.

9. Plaque à induction selon l'une des revendications 1 à 8, telle que sa contrainte à cœur est comprise entre 2 et 80 Mpa pour une épaisseur de 1.5 à 6 mm.

10. Plaque à induction selon l'une des revendications 1 à 9, telle qu'elle résiste à la formation d'écailles par application d'une pointe sous une force de 1 N, et/ou telle qu'elle résiste à la formation de fissurations après application d'une bille en acier de 500 $\mu$m de diamètre sous une force de 20 N, voire 30 N.

11. Plaque à induction selon l'une des revendications 1 à 10, telle que l'épaisseur de la plaque en verre est inférieure ou égale à 4 mm, en particulier inférieure ou égale à 3.5 mm, notamment inférieure ou égale à 3 mm.

12. Plaque à induction selon l'une des revendications 1 à 11, telle que la composition chimique du verre, initiale ou au cœur de la plaque, comprend de la silice $SiO_2$ à une teneur pondérale allant de 49 à 75%, de l'alumine $Al_2O_3$ à une teneur pondérale allant de 15 à 30% et de l'oxyde de lithium $Li_2O$ à une teneur pondérale allant de 1 à 8%.

13. Plaque à induction selon l'une des revendications 1 à 12, telle que la composition chimique du verre, initiale ou au cœur de la plaque, comprend les constituants suivants, variant dans les limites pondérales ci-après définies : $SiO_2$ : 49 - 75 % ; $Al_2O_3$ : 15 - 30 % ; $Li_2O$ : 1 - 8 % ; $K_2O$ : 0 - 5 % ; $Na_2O$ : 0 - 5 % ; ZnO : 0 - 5 % ; MgO : 0 - 5 %; CaO : 0 - 5%; BaO : 0 - 5 %; SrO : 0 - 5 %; $TiO_2$ : 0 - 6 %; $ZrO_2$ : 0 - 5 %; $P_2O_5$ : 0 - 10 % ; $B_2O_3$ : 0 - 5%.

14. Plaque à induction selon l'une des revendications 1 à 13 , telle que la composition chimique du verre, initiale ou au cœur de la plaque, comprend les constituants suivants, variant dans les limites pondérales ci-après définies : $SiO_2$: 52 - 75 % ; $Al_2O_3$ : 18 - 27 % ; $Li_2O$ : 1.5 - 5.5 % ; $K_2O$ : 0 - 3 % ; $Na_2O$ : 0 - 3 % ; ZnO : 0 - 3.5 % ; MgO : 0 - 3 %; CaO : 0 - 4.5%; BaO : 0 - 3.5 %; SrO : 0 - 2 %; $TiO_2$ : 0 - 5.5 %; $ZrO_2$ : 0 - 3 %; $P_2O_5$ : 0 - 8 % ; $B_2O_3$ : 0 - 3%.

15. Plaque à induction selon l'une des revendications 1 à 14, telle que le coefficient de dilatation thermique linéaire du verre est d'au plus $70.10^{-7}$/K, notamment est compris entre $30.10^{-7}$/K et $50.10^{-7}$/K.

16. Dispositif de cuisson par induction comprenant au moins un inducteur et au moins une plaque selon l'une des revendications 1 à 15.

17. Dispositif selon l'une des revendications 1 à 16, telle qu'au moins une partie de la surface de la plaque est munie d'au moins un revêtement, et/ou en ce qu'un matériau ou élément, en particulier opacifiant, est disposé entre la plaque et les éléments internes du dispositif.

18. Procédé de fabrication d'une plaque à induction selon l'une des revendications 1 à 15, dans lequel la plaque en verre d'aluminosilicate de lithium est mise en contact avec au moins un sel de potassium, en particulier pendant au moins 8h à au moins 360°C.

19. Procédé selon la revendication 18, tel que la plaque de verre est trempée dans au moins un bain de sels de potassium, notamment un bain de nitrate de potassium, chauffé à une température préférentiellement comprise entre 360°C et 500°C, en particulier comprise entre 450°C et 500°C, le temps de maintien du verre dans le bain étant également préférentiellement compris entre 8 h et 72 h, en particulier compris entre 16 et 32 h.

20. Procédé selon l'une des revendications 17 ou 18, tel que le verre est préchauffé avant d'être plongé dans le bain, le verre étant en outre refroidi après retrait du bain, puis le cas échéant rincé, avant séchage éventuel.

**Patentansprüche**

1. Induktionskochplatte, die dazu bestimmt ist, Induktionsheizelemente abzudecken oder aufzunehmen, wobei die Platte eine Glasplatte ist, deren Zusammensetzung vom Typ Lithium-Aluminosilikat ist, wobei die Platte einen Oberflächenbereich von mindestens 5 $\mu$m Dicke aufweist, der Kaliumionen enthält, welche die Lithiumionen des Glases ersetzen.

2. Induktionsplatte nach Anspruch 1, wobei die Dicke des Oberflächenbereichs im Bereich zwischen 6 und

120 μm, vorzugsweise zwischen 20 und 90 μm, insbesondere zwischen 40 und 80 μm oder sogar zwischen 50 und 70 μm liegt.

3. Induktionsplatte nach einem der Ansprüche 1 bis 2, wobei der Kaliumgehalt an der Glasoberfläche und an jedem Punkt der Dicke des Oberflächenbereichs höher ist als der Kaliumgehalt in dem zentralen Bereich, bezogen auf den Kaliumgehalt in dem zentralen Bereich insbesondere mindestens um 0,5 Gew.-% höher ist.

4. Induktionsplatte nach einem der Ansprüche 1 bis 3, wobei der Kaliumgehalt an der Glasoberfläche bezogen auf den Kaliumgehalt im zentralen Bereich mindestens um 3 Gew.-% höher ist.

5. Induktionsplatte nach einem der Ansprüche 1 bis 4, wobei der Kaliumgehalt über eine Dicke von 5 μm ausgehend von der Glasoberfläche nach Erwärmen auf 350 °C während 1000 Stunden um weniger als 30 % abnimmt.

6. Induktionsplatte nach einem der Ansprüche 1 bis 5, wobei ihre Biegebruchspannung vor und nach Alterung, insbesondere nach Erwärmen auf 350 °C während 1000 h oder nach Erwärmen auf 450 °C während 10 Minuten, mindestens 400 MPa, vorzugsweise mindestens 500 MPa, insbesondere mindestens 550 MPa und gegebenenfalls mindestens 600 MPa beträgt.

7. Induktionsplatte nach einem der Ansprüche 1 bis 6, wobei ihre Biegebruchspannung vor Tempern mindestens 550 MPa, vorzugsweise mindestens 600 MPa, insbesondere mindestens 700 MPa oder sogar mindestens 750 MPa beträgt.

8. Induktionsplatte nach einem der Ansprüche 1 bis 7, wobei ihre Biegebruchspannung nach Erwärmen auf 350 °C während 1000 Stunden mindestens 400 MPa, insbesondere mindestens 500 MPa, besonders mindestens 550 MPa oder sogar mindestens 600 MPa beträgt und/oder nach Erwärmen auf 450 °C während 10 Minuten mindestens 550 MPa, insbesondere mindestens 600 oder sogar mindestens 650 MPa, besonders mindestens 700 MPa für die Platte beträgt.

9. Induktionsplatte nach einem der Ansprüche 1 bis 8, wobei ihre Spannung im Kern für eine Dicke von 1,5 bis 6 mm im Bereich zwischen 2 und 80 Mpa liegt.

10. Induktionsplatte nach einem der Ansprüche 1 bis 9, wobei sie der Bildung von Schuppen durch Aufbringen einer Spitze unter einer Kraft von 1 N widersteht und/oder wobei sie der Bildung von Rissen nach Aufbringen einer Stahlkugel von 500 μm Durchmesser unter einer Kraft von 20 N oder sogar 30 N widersteht.

11. Induktionsplatte nach einem der Ansprüche 1 bis 10, wobei die Dicke der Glasplatte weniger als oder gleich 4 mm, insbesondere weniger als oder gleich 3,5 mm, besonders weniger als oder gleich 3 mm beträgt.

12. Induktionsplatte nach einem der Ansprüche 1 bis 11, wobei die chemische Zusammensetzung des Glases, anfänglich oder im Kern der Platte, Siliciumdioxid $SiO_2$ mit einem Gewichtsanteil, der von 49 bis 75 % reicht, Aluminiumoxid $Al_2O_3$ mit einem Gewichtsanteil, der von 15 bis 30 % reicht, und Lithiumoxid $Li_2O$ mit einem Gewichtsanteil, der von 1 bis 8 % reicht, umfasst.

13. Induktionsplatte nach einem der Ansprüche 1 bis 12, wobei die chemische Zusammensetzung des Glases, anfänglich oder im Kern der Platte, folgende Bestandteile umfasst, die innerhalb der nachfolgend definierten Gewichtsgrenzen variieren: $SiO_2$: 49 - 75 %; $Al_2O_3$: 15 - 30 %; $Li_2O$: 1 - 8 %; $K_2O$: 0 - 5 %; $Na_2O$: 0 - 5 %; ZnO: 0 - 5 %; MgO: 0 - 5 %; CaO: 0 - 5 %; BaO: 0 - 5 %; SrO: 0 - 5 %; $TiO_2$ : 0 - 6 %; $ZrO_2$ : 0 - 5 %; $P_2O_5$: 0 - 10 %; $B_2O_3$: 0 - 5 %.

14. Induktionsplatte nach einem der Ansprüche 1 bis 13, wobei die chemische Zusammensetzung des Glases, anfänglich oder im Kern der Platte, folgende Bestandteile umfasst, die innerhalb der nachfolgend definierten Gewichtsgrenzen variieren: $SiO_2$: 52 - 75 %; $Al_2O_3$: 18 - 27 %; $Li_2O$: 1,5 - 5,5 %; $K_2O$: 0 - 3 %; $Na_2O$: 0 - 3 %; ZnO: 0 - 3,5 %; MgO: 0 - 3 %; CaO: 0 - 4.5 %; BaO: 0 - 3,5 %; SrO: 0 - 2 %; $TiO_2$ : 0 - 5,5 %; $ZrO_2$ : 0 - 3 %; $P_2O_5$ : 0 - 8 %; $B_2O_3$: 0 - 3 %.

15. Induktionsplatte nach einem der Ansprüche 1 bis 14, wobei der lineare Wärmeausdehnungskoeffizient des Glases höchstens $70.10^{-7}$/K beträgt, insbesondere im Bereich zwischen $30.10^{-7}$/K und $50.10^{-7}$/K liegt.

16. Induktionskochvorrichtung, umfassend mindestens einen Induktor und mindestens eine Platte nach einem der Ansprüche 1 bis 15.

17. Vorrichtung nach einem der Ansprüche 1 bis 16, wobei mindestens ein Teil der Plattenoberfläche mit mindestens einer Beschichtung versehen ist und/oder ein insbesondere strahlungsundurchlässiges Material oder Element zwischen der Platte und den Innenelementen der Vorrichtung angeordnet ist.

18. Verfahren zum Herstellen einer Induktionsplatte nach einem der Ansprüche 1 bis 15, wobei die Glasplatte aus Lithium-Aluminosilikat insbesondere während mindestens 8 h bei mindestens 360 °C mit mindestens einem Kaliumsalz in Kontakt gebracht wird.

**19.** Verfahren nach Anspruch 18, wobei die Glasplatte in mindestens einem Bad aus Kaliumsalzen, insbesondere einem Bad aus Kaliumnitrat, erwärmt auf eine Temperatur vorzugsweise im Bereich zwischen 360 °C und 500 °C, insbesondere im Bereich zwischen 450 °C und 500 °C, gehärtet wird, wobei die Haltezeit des Glases in dem Bad ebenfalls vorzugsweise im Bereich zwischen 8 h und 72 h, insbesondere im Bereich zwischen 16 und 32 h, liegt.

**20.** Verfahren nach einem der Ansprüche 17 oder 18, wobei das Glas vor dem Eintauchen in das Bad vorgewärmt wird, wobei das Glas nach Entnahme aus dem Bad ferner abgekühlt und anschließend gegebenenfalls vor eventuellem Trocknen abgespült wird.

**Claims**

**1.** A induction cooking plate, intended for covering or receiving induction heating elements, said plate being a glass plate with a lithium aluminosilicate-type composition, said plate having a surface zone at least 5 $\mu$m thick that comprises potassium ions in replacement of the lithium ions of the glass.

**2.** The induction plate as claimed in claim 1, wherein the thickness of the surface zone is between 6 and 120 $\mu$m, preferably between 20 and 90 $\mu$m, more particularly between 40 and 80 $\mu$m, or even from 50 to 70 $\mu$m.

**3.** The induction plate as claimed in either of claims 1 and 2, wherein the level of potassium at the surface of the glass and at any point in the thickness of the surface zone is greater than the level of potassium in the central zone, and more particularly is greater by at least 0.5% by weight relative to the level of potassium in the central zone.

**4.** The induction plate as claimed in any of claims 1 to 3, wherein the level of potassium at the surface of the glass is greater by at least 3% by weight relative to the level of potassium in the central zone.

**5.** The induction plate as claimed in any of claims 1 to 4, wherein the level of potassium over a thickness of 5 $\mu$m from the surface of the glass reduces by less than 30% after heating at 350°C for 1000 h.

**6.** The induction plate as claimed in any of claims 1 to 5, such that its flexural breaking stress is at least 400 MPa, preferably at least 500 MPa, more particularly at least 550 MPa, and where appropriate at least 600 MPa, before and after aging, more particularly after heating at 350°C for 1000 h or after heating at 450°C for 10 minutes.

**7.** The induction plate as claimed in any of claims 1 to 6, such that its flexural breaking stress before detempering is at least 550 MPa, preferably at least 600 MPa, more particularly at least 700 MPa, or even at least 750 MPa.

**8.** The induction plate as claimed in any of claims 1 to 7, such that its flexural breaking stress is at least 400 MPa, more particularly at least 500 MPa, in particular at least 550 MPa, or even at least 600 MPa after heating at 350°C for 1000 h, and/or is at least 550 MPa, more particularly at least 600, or even at least 650 MPa, in particular at least 700 MPa, for said plate after heating at 450°C for 10 minutes.

**9.** The induction plate as claimed in any of claims 1 to 8, such that its core stress is between 2 and 80 Mpa for a thickness of 1.5 to 6 mm.

**10.** The induction plate as claimed in any of claims 1 to 9, such that it is resistant to formation of flakes by application of a point under a force of 1 N, and/or such that it is resistant to formation of cracks after application of a 500 $\mu$m-diameter steel ball under a force of 20 N, or even 30 N.

**11.** The induction plate as claimed in any of claims 1 to 10, wherein the thickness of the glass plate is less than or equal to 4 mm, more particularly less than or equal to 3.5 mm, in particular less than or equal to 3 mm.

**12.** The induction plate as claimed in any of claims 1 to 11, wherein the chemical composition of the glass, initially or at the core of the plate, comprises silica $SiO_2$ in an amount by weight of from 49% to 75%, alumina $Al_2O_3$ in an amount by weight of from 15% to 30%, and lithium oxide $Li_2O$ in an amount by weight of from 1% to 8%.

**13.** The induction plate as claimed in any of claims 1 to 12, wherein the chemical composition of the glass, initially or at the core of the plate, comprises the following constituents, varying within the weight limits defined below: $SiO_2$: 49%-75%; $Al_2O_3$: 15%-30%; $Li_2O$: 1%-8%; $K_2O$: 0%-5%; $Na_2O$: 0%-5%; ZnO: 0%-5%; MgO: 0%-5%; CaO: 0%-5%; BaO: 0%-5%; SrO: 0%-5%; $TiO_2$: 0%-6%; $ZrO_2$: 0%-5%; $P_2O_5$: 0%-10%; $B_2O_3$: 0%-5%.

**14.** The induction plate as claimed in any of claims 1 to 13, wherein the chemical composition of the glass, initially or at the core of the plate, comprises the following constituents, varying within the weight limits

defined below: $SiO_2$: 52%-75%; $Al_2O_3$: 18%-27%; $Li_2O$: 1.5%-5.5%; $K_2O$: 0%-3%; $Na_2O$: 0%-3%; ZnO: 0%-3.5%; MgO: 0%-3%; CaO: 0%-4.5%; BaO: 0%-3.5%; SrO: 0%-2%; $TiO_2$ : 0%-5.5%; $ZrO_2$ : 0%-3%; $P_2O_5$: 0%-8%; $B_2O_3$: 0%-3%.

15. The induction plate as claimed in any of claims 1 to 14, wherein the linear thermal expansion coefficient of the glass is not more than $70 \times 10^{-7}$/K, and in particular is between $30 \times 10^{-7}$/K and $50 \times 10^{-7}$/K.

16. An induction cooking appliance comprising at least one inductor and at least one plate as claimed in any of claims 1 to 15.

17. The appliance as claimed in any of claims 1 to 16, wherein at least part of the surface of the plate is equipped with at least one coating, and/or in that a material or element, more particularly with opacifying effect, is disposed between the plate and the internal elements of the appliance.

18. A method for manufacturing a glass induction plate as claimed in any of claims 1 to 15, wherein the lithium aluminosilicate glass plate is contacted with at least one potassium salt, more particularly for at least 8 h at not less than 360°C.

19. The method as claimed in claim 18, wherein the glass plate is tempered in at least one potassium salt bath, in particular a potassium nitrate bath, which is heated at a temperature preferably of between 360°C and 500°C, more particularly of between 450°C and 500°C, the hold time of the glass in the bath being also preferably between 8 h and 72 h, more particularly between 16 h and 32 h.

20. The method as claimed in either of claims 17 and 18, wherein the glass is preheated before being immersed into the bath, the glass being, moreover, cooled after withdrawal from the bath, and then, where appropriate, rinsed, prior to optional drying.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- GB 2079119 19800000
- WO 2013136013 A
- US 20050250639 A

**Littérature non-brevet citée dans la description**

- **H. ABEN ; C. GUILLEMET.** Photoelasticity of glass. Springer Verlag, 1993, 65, , 123, , 124, , 146